# EUROPÄISCHE PATENTSCHRIFT

(11) **EP 2 336 622 B1**
(45) Veröffentlichungstag und Bekanntmachung des Hinweises auf die Patenterteilung: **19.11.2014**
(21) Anmeldenummer: 10008204.9
(22) Anmeldetag: 06.08.2010
(51) Int. Cl.: F16L 3/12, H02G 3/04, F16L 57/02

(54) **Vorrichtung zum Biegen und Halten**
Device for bending and holding
Dispositif de cintrage et de retenue

(30) Priorität: 06.08.2009 DE 102009036307
(43) Veröffentlichungstag der Anmeldung: 22.06.2011
(73) Patentinhaber: Keßler, Sven, 75236 Kämpfelbach (DE); Keßler, Peter, 75236 Kämpfelbach (DE)
(72) Erfinder: Keßler, Sven, 75236 Kämpfelbach (DE); Keßler, Peter, 75236 Kämpfelbach (DE)
(74) Vertreter: Arat, Dogan

(56) Entgegenhaltungen:
- WO-A1-02/084147
- DE-A1- 10 043 580
- JP-A- H02 163 545
- US-A- 2 684 512
- US-A- 3 578 026

## Beschreibung

### TECHNISCHES GEBIET

Die Erfindung betrifft eine Vorrichtung nach dem Oberbegriff des Anspruchs 1.

### STAND DER TECHNIK

Beim Verlegen von Leitungen Kabeln oder Rohren, müssen diese häufig in engen Radien geführt und in diesen gehalten werden. Zudem sollen die Leitungen, Kabel oder Rohre nicht geknickt und nicht an scharfen Kanten scheuern oder reiben, um nicht beschädigt zu werden.

In diesem Zusammenhang wird auf die US 2,684,512 A verwiesen, welche eine Vorrichtung nach dem Oberbegriff des Anspruchs 1 aufzeigt. Daneben wir auf die US 3,578,026 A verwiesen, welche ebenfalls eine Vorrichtung zum Biegen und Halten von Rohren und Kabeln offenbart.

Um das Führen von Rohren, Kabeln oder Leitungen, auch in engen Radien zu erleichtern, zeigt bspw. die DE 100 43 580 A1 ein Biege- und Haltehilfsmittel für Rohre, Kabel oder Leitungen bei dem die Rohre, Kabel oder Leitungen in einem länglichen rohrförmigen Hohlkörper geführt werden. An seinen Enden ist der Hohlkörper geöffnet und kann so über die Leitungen geschoben werden. Dieser längliche Hohlkörper ist aus einzelnen Gelenkgliedern gebildet und kann gebogen und in einer Biegeposition verrastet werden. Nachteiligerweise können Kabel, Leitungen oder Rohre die Verdickungen aufweisen, die größer als der Durchmesser des Hohlkörpers ausgebildet sind, nicht durch das Biege- und Haltehilfsmittel gezogen werden.

### AUFGABE

Aufgabe der Erfindung ist, eine solche Vorrichtung zum Biegen und Halten zu verbessern und vielfältiger einsetzbar zu gestalten.

### LÖSUNG DER AUFGABE

Zur Lösung der Aufgabe führt, dass die Vorrichtung über ihre gesamte Länge eine Öffnung aufweist. Dabei ist mit "Länge" die Ausdehnung der Vorrichtung in axialer Richtung gemeint. Bevorzugt ist die Vorrichtung als Hohlkörper ausgebildet und an seinen beiden Enden geöffnet. Vorzugsweise weist der Höhlkörper einen runden, ovalen oder eckigen Querschnitt auf.

Besonders bevorzugt ist die Öffnung spaltförmig ausgebildet. Durch diese Öffnung können Rohre, Kabel und Leitungen in die Vorrichtung eingebracht werden. Vorteilhafterweise können dadurch auch Rohre, Kabel oder Leitungen, die eine lokale Verdickung wie bspw. einen Stecker, aufweisen, die den Durchmesse der Vorrichtung übersteigt, mittels der Vorrichtung geführt werden.

Die Öffnung ist verschliessbar ausgebildet. Das hat den Vorteil, dass Kabel, Rohre, Leitungen und dergleichen in der Vorrichtung gehalten werden und nicht wieder durch die Öffnung aus der Vorrichtung rutschen oder gleiten können.

Besonders bevorzugt ist die Öffnung ausgebildet, so dass sie nach dem Verschliessen auch wieder geöffnet werden kann. Zweckmässigerweise ist ein beliebig häufiges Öffnen und Schliessen der Vorrichtung möglich. Der Vorteil der wieder verschliessbaren Öffnung ist, dass der in der Vorrichtung geführt Gegenstand aus der Vorrichtung entnommen werden kann, ohne dass die Vorrichtung oder der Gegenstand zerstört werden müssen. Dadurch ist die Vorrichtung mehrmals verwendbar.

Erfindungsgemäß ist der Öffnung zumindest ein Verschlusselement und zumindest ein Aufnahmeelement zugeordnet. Das Verschlusselement und das Aufnahmeelement sind zum Verschliessen der Öffnung in Wirkverbindung bringbar. Besonders bevorzugt ist das Verschlusselement als Stift ausgebildet. An dem Stift kann ein Keil vorgesehen sein. Der Stift greift zum Verschliessen der Öffnung in ein entsprechendes Aufnahmeelement ein. Dabei ist das Aufnahmeelement bevorzugt so ausgebildet, dass sich der Keil in dem Aufnahmeelement verklemmt und der Stift und das Aufnahmeelement nur mit einer gewissen Kraft, aber nicht unbeabsichtigt voneinander trennbar sind. Vom Erfindungsgedanken sollen aber auch andere trennbare Verbindungssystem wie Klettverschluss, Druckknopf, Haken und Öse, Klebstoff und/oder Magnete umfasst sein.

Erfindungsgemäß weist die biegbare Vorrichtung eine Rastvorrichtung auf. Diese hat den Vorteil, dass die Vorrichtung in einer gewünschten gebogenen Position feststellbar ist. Die Rastvorrichtung umfasst jeweils einen Rasthaken, der mit einer Rastnase in Wirkverbindung bringbar ist. Ferner sind das zumindest eine Verschlusselement und das zumindest eine Aufnahmeelement der Rastvorrichtung zugeordnet. Besonders bevorzugt ist die Rastvorrichtung geteilt ausgeführt, wobei jeweils ein Teil der Rastvorrichtung seitlich der Öffnung vorgesehen ist.

Um die Vorrichtung biegbar zu gestalten, umfasst diese zumindest zwei Glieder, die gelenkig miteinander verbunden sind. Besonders bevorzugt ist zumindest einem Glied zumindest ein Verschlusselement und zumindest ein Aufnahmeelement zugeordnet. Da hat den Vorteil, dass jedes Glied einzeln verschlossen wird. Dadurch werden das zumindest eine Verschlusselement und das zumindest eine Aufnahmeelement durch das Biegen nicht beeinflusst. Besonders bevorzugt sind das Verschlusselement und das Aufnahmeelement gegenüberliegend, angeordnet.

Besonders bevorzugt weist die Vorrichtung in etwa gegenüberliegend der Öffnung ein Gelenk auf bzw. ist gelenkig ausgebildet. Das hat den Vorteil, dass die Vorrichtung zum Einbringen eines Kabel, Rohres oder einer Leitung die Öffnung erweitert werden kann. Vorzugsweise wird die Gelenkigkeit über einen Schlitz, ein Filmgelenk, eine Materialschwächung oder eine beweglichen Materialstreifen erreicht.

Besonders bevorzugt umfasst die Vorrichtung eine erste und eine zweite Halbschale. Dabei sind die erste und die zweite Halbschale zweckmässigerweise miteinander verbunden. Besonders bevorzugt erfolgt die Verbindung gelenkig. In einem besonders bevorzugten Ausführungsbeispiel erfolgt die gelenkige Verbindung über einen Materialstreifen, der zwischen der ersten und der zweiten Halbschale eingesetzt ist. Dabei kann der Materialstreifen mit der ersten und der zweiten Halbschale jeweils vernietet, verklebt, verpresst, verschraubt, verschweisst oder einstückig an diese angeformt sein.

Schutz begehrt wird ebenfalls für ein Verfahren zum Festlegen und Führen von länglichen Bauteilen, insbesondere für Rohre Kabel und Leitungen, mit den Schritten: Einbringen des länglichen Bauteils durch eine Öffnung in eine Vorrichtung zum Biegen und Halten und Schliessen der Öffnung. Bevorzugt wird die Öffnung wieder lösbar verschlossen. Zweckmässigerweise wird die Vorrichtung zum Biegen und Halten anschliessend in eine gewünschte Position gebogen und in dieser gewünschten Position verrastet.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Darstellung einer erfindungsgemässen Vorrichtung zum Biegen und Halten;
Figur 2 einen vergrösserten Ausschnitt der erfindungsgemässen Vorrichtung zum Biegen und Halten nach Figur 1;
Figur 3 einen weiteren vergrösserten Ausschnitt der erfindungsgemässen Vorrichtung zum Biegen und Halten gemäss Figur 1;
Figur 4 eine weitere perspektivische Darstellung der erfindungsgemässen Vorrichtung zum Biegen und Halten.

### AUSFÜHRUNGSBEISPIEL

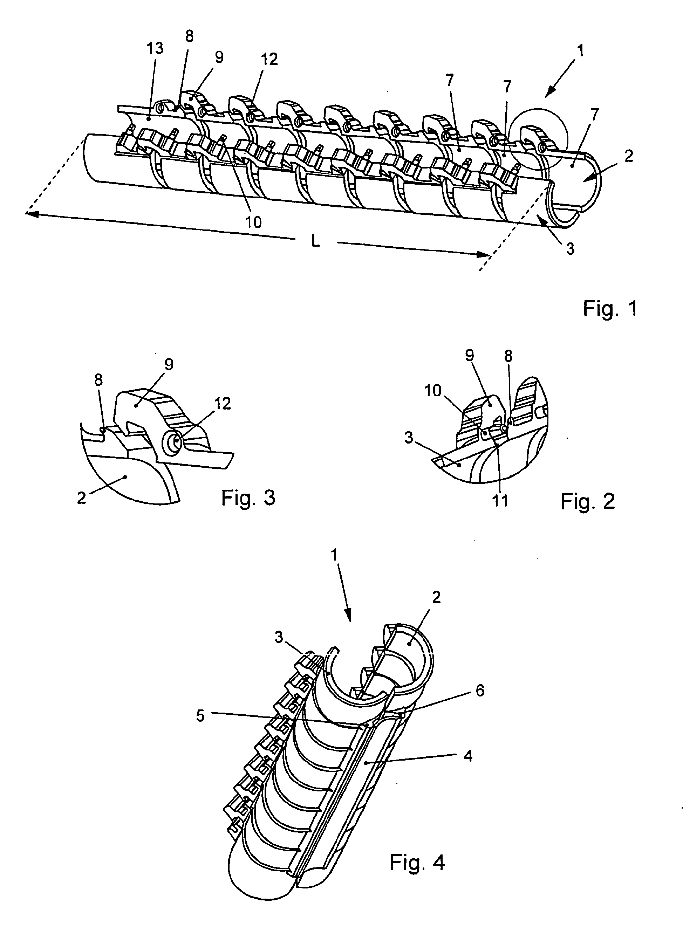

Figur 1 zeigt eine erfindungsgemässe Vorrichtung 1 zum Biegen und Halten von Rohren, Kabeln oder Leitungen. Die Vorrichtung 1 umfasst eine erste Halbschale 2 und eine zweite Halbschale 3. Diese sind, wie in Figur 4 dargestellt, über einen Materialstreifen 4 gelenkig miteinander verbunden. Zur Festlegung des Materialstreifens 4 weist jede Halbschale 2 und 3 jeweils einen Steg 5 und 6 auf.

Die Halbschale 2 umfasst mehre Glieder 7. Diese sind gelenkig miteinander verbunden. Zur Verbindung kann entweder der Materialstreifen 4 oder bspw. ein Filmgelenk od. dgl. dienen. Die Halbschale 3 ist analog aufgebaut. Gegenüberliegend dem Materialstreifen 4 ist zwischen der Halbschale 2 und der Halbschale 3 eine Öffnung 13 ausgebildet. Diese Öffnung 13 erstreckt sich über eine Länge L der Vorrichtung 1 zum Biegen und Halten.

An jedes der Glieder 7 ist jeweils eine Rastnase 8 und ein Rasthaken 9 angeformt. Diese sind miteinander in Wirkverbindung bringbar, so dass die Vorrichtung 1 in einer gebogenen Position gehalten werden kann. In ihrer Gesamtheit bilden die Rasthaken 9 und die Rastenasen 8 eine Rastvorrichtung aus. Jedem Rasthaken 9 der Halbschale 3 ist ein Verschlusselement 10 zugeordnet. Wie aus der vergrösserten Darstellung in Figur 2 hervorgeht, ist dieses Verschlusselement 10 stiftförmig ausgebildet und weist einen Keil 11 auf. Dem gegenüberliegenden Rasthaken 9 der Halbschale 2 sind entsprechende Aufnahmeelemente 12 zugeordnet. Diese Aufnahmeelemente 12 sind mit den Verschlusselementen 11 zum Verschliessen der Öffnung 13 in Wirkverbindung bringbar. Im vorliegenden Ausführungsbeispiel sind die Aufnahmeelemente 12 als Vertiefungen in den Rasthaken 9 der Halbschale 2 ausgebildet.

Für andere Ausführungsbeispiele sind vom Erfindungsgedanken auch Verbindungssysteme, wie Haken und Öse, Klettverschluss, Klebepunkte oder Magnete umfasst.

Vom Erfindungsgedanken soll auch umfasst sein, dass die Aufnahmeelemente in anderen Ausführungsbeispielen auf die Rasthaken oder auch die Rastnasen aufgesetzt werden können, in der Art und Weise eines Druckknopfes.

Die Funktionsweise der vorliegenden Erfindung ist:

Durch die Öffnung 13 kann ein Kabel, eine Leitung und/oder ein Rohr zwischen die beiden Halbschalen 2 und 3 der Vorrichtung 1 zum Biegen und Halten eingebracht werden. Dann wird die Öffnung 13 verschlossen. Dazu wird jedes Verschlusselement 10 in das entsprechende gegenüberliegende Aufnahmeelement 12 gedrückt. Jetzt ist das Rohr, die Leitung oder das Kabel in der Vorrichtung 1 geführt und kann nicht mehr unbeabsichtigt aus dieser herausrutschen.

Nachdem Verschliessen der Öffnung 13 kann die Vorrichtung 1 in eine gewünschte Position gebogen werden. In dieser gewünschten Position werden die Rasthaken 9 in den entsprechenden Rastnasen 8 verrastet. Dadurch wird die Vorrichtung 1 in der gewünschten gebogenen Position gehalten.

Um das in die Vorrichtung 1 eingebrachte Rohr, Kabel oder Leitung aus der Vorrichtung wieder zu entnehmen, wird die Öffnung 13 wieder geöffnet. Dazu werden die stiftförmigen Verschlusselemente 10 aus den Aufnahmen 12 gezogen. Das Öffnen der Öffnung 13 ist vorzugsweise in gebogenem und in ungebogenem Zustand möglich.

### GEWERBLICHE ANWENDBARKEIT

Die erfindungsgemässe Vorrichtung zum Biegen und Halten ist besonders vielfältig einsetzbar, da sie sich auch für die mehrmalige Verwendung wie bspw. für Kabel an Schreibtischen und dgl. eignet.

Daneben dient sie dem Einsatz als Schutz- und Stabilisierungsvorrichtung im Sanitär und Heizungsbedarf. In diesem Zusammenhang sollen Heizungs- und Wasserrohre mit der erfindungsgemässen Vorrichtung stabilisiert, geschützt und in eine gewünschte Form gebracht werden. Die Schutzfunktion soll sich im Besonderen darauf erstrecken Kabel, Leitungen od. dgl. Vor Reibung zu schützen.

Der Begriff des Kabels ist hier allgemein zu verstehen und umfasst nicht nur Stromkabel, sondern auch Glasfaserkabel oder Wasser- Heizrohre. Unter den Begriff des Kabels sollen auch Hausversorgungsleitungen fallen.

Ein weiterer Fall der gewerblichen Anwendbarkeit ist darin zu sehen, dass Elektro- oder Druckluftleitungen z.B. im Kraftfahrzeug- oder Flugzeugsektor darunter fallen sollen.

**Bezugszeichenliste**

| | | | | | |
|---|---|---|---|---|---|
| 1 | Vorrichtung | | | | |
| 2 | Halbschale | | | | |
| 3 | Halbschale | | | | |
| 4 | Materialstreifen | | | | |
| 5 | Steg | | | | |
| 6 | Steg | | | | |
| 7 | Glied | | | | |
| 8 | Rastnase | | | | |
| 9 | Rasthaken | | | | |
| 10 | Verschlusselement | | | | |
| 11 | Keil | | | | |
| 12 | Aufnahmeelemente | | | | |
| 13 | Öffnung | | | | |
| | | | | | |
| | | | | | |
| | | | | L | Länge |
| | | | | | |
| | | | | | |
| | | | | | |
| | | | | | |
| | | | | | |
| | | | | | |
| | | | | | |
| | | | | | |
| | | | | | |
| | | | | | |
| | | | | | |
| | | | | | |
| | | | | | |
| | | | | | |
| | | | | | |
| | | | | | |
| | | | | | |

## Patentansprüche

1. Vorrichtung (1) zum Biegen und Halten, insbesondere für Rohre, Kabel und Leitungen, wobei die Vorrichtung (1) biegbar und in einer gewünschten Position feststellbar ist, wobei die Vorrichtung (1) über ihre gesamte Länge (L) eine Öffnung (13) aufweist, wobei die Öffnung (13) verschliessbar ausgebildet ist, wobei der Öffnung (13) zumindest ein Verschlusselement (10) und zumindest ein Aufnahmeelement (12) zugeordnet sind, wobei das Aufnahmeelement (10) und das Verschlusselement (12) zum Verschliessen der Öffnung (13) in Wirkverbindung bringbar sind,
**gekennzeichnet durch**
eine Rastvorrichtung, wobei zumindest das zumindest eine Verschlusselement (10) und das zumindest eine Aufnahmeelement (12) der Rastvorrichtung zugeordnet sind, wobei die Rastvorrichtung jeweils einen Rasthaken (9), der mit einer Rastnase (8) in Wirkverbindung bringbar ist, umfasst, so dass die Vorrichtung (1) in einer gebogenen Position gehalten werden kann, wobei jedem Rasthaken (9) ein Verschlusselement (10) zugeordnet ist.

2. Vorrichtung nach Anspruch 1, **dadurch gekennzeichnet, dass** das Verschlusselement (10) als Stift ausgebildet ist.

3. Vorrichtung nach Anspruch 2, **dadurch gekennzeichnet, dass** an dem Stift ein Keil (11) vorgesehen ist.

4. Vorrichtung nach einem der Ansprüche 1 bis 3, **gekennzeichnet durch** zumindest zwei Glieder (7), wobei zumindest einem Glied (7) das zumindest eine Verschlusselement (10) und das zumindest eine Aufnahmeelement (12) zugeordnet ist.

5. Vorrichtung nach Anspruch 4, **dadurch gekennzeichnet, dass** das zumindest eine Verschlusselement (10) und das zumindest eine Aufnahmeelement (12) gegenüberliegend angeordnet sind.

6. Vorrichtung nach einem der Ansprüche 1 bis 5, **dadurch gekennzeichnet, dass** die Vorrichtung (1) eine erste (2) und eine zweite Halbschale (3) umfasst.

7. Vorrichtung nach Anspruch 6, **dadurch gekennzeichnet, dass** die erste (2) und die zweite Halbschale (3) gelenkig miteinander verbunden sind.

8. Verfahren zum Festlegen und Führen von länglichen Bauteilen, insbesondere für Rohre, Kabel und Leitungen, **gekennzeichnet durch** folgende Schritte: Einbringen des Bauteils **durch** eine Öffnung (13) in eine Vorrichtung (1) zum Biegen und Halten nach einem der Ansprüche 1 bis 7 und Schliessen der Öffnung (13).

9. Verfahren nach Anspruch 8, **gekennzeichnet durch** Biegen der Vorrichtung (1) zum Biegen und Halten und des Bauteils in eine gewünschte Position und Verrasten der Vorrichtung (1) in der gewünschten Position.

## Claims

1. A device (1) for bending and holding, in particular for pipes, cables and lines, wherein the device (1) is bendable and securable in a desired position, wherein the device (1) has an opening (13) over its entire length (L), wherein the opening (13) is closable, wherein at least one closure element (10) and at least one receiving element (12) are associated with the opening (13), wherein the receiving element (10) and the closure element (12) are bringable into an operative connection to close the opening (13), **characterised by**
a locking device, wherein at least the at least one closure element (10) and the at least one receiving element (12) are associated with the locking device, wherein the locking device in each case comprises a locking hook (9) bringable into an operative connection with a locking nose (8), so that the device (1) can be held in a bent position, wherein a closure element (10) is associated with each locking hook (9).

2. A device according to claim 1, **characterised in that** the closure element (10) is in the form of a pin.

3. A device according to claim 2, **characterised in that** a wedge (11) is provided at the pin.

4. A device according to any one of claims 1 to 3, **characterised by** at least two members (7), wherein the at least one closure element (10) and the at least one receiving element (12) are associated with at least one member (7).

5. A device according to claim 4, **characterised in that** the at least one closure element (10) and the at least one receiving element (12) are arranged opposite one another.

6. A device according to any one of claims 1 to 5, **characterised in that** the device (1) comprises a first (2) and a second half shell (3).

7. A device according to claim 6, **characterised in that** the first (2) and the second half shell (3) are connected to one another in an articulated manner.

8. A method of making fast and guiding elongate components, in particular for pipes, cables and lines, **characterised by** the following steps: introduction of the component through an opening (13) into a device (1) for bending and holding according to any one of claims 1 to 7 and closure of the opening (13).

9. A method according to claim 8, **characterised by** bending of the device (1) for bending and holding and the component into a desired position and locking of the device (1) in the desired position.

## Revendications

1. Dispositif (1) de cintrage et de retenue, en particulier pour des tuyaux, des câbles et des conduits, ledit dispositif (1) pouvant être cintré et fixé dans une position souhaitée, le dispositif (1) présentant sur toute sa longueur (L) une ouverture (13), l'ouverture (13) étant réalisée de manière à pouvoir être fermée, à l'ouverture (13) étant associés au moins un élément de fermeture (10) et au moins un élément de réception (12), l'élément de réception (10) et l'élément de fermeture (12) pouvant être amenés en liaison active pour fermer l'ouverture (13),
**caractérisé par**
un dispositif d'encliquetage, au moins l'au moins un élément de fermeture (10) et l'au moins un élément de réception (12) étant associés au dispositif d'encliquetage, le dispositif d'encliquetage comportant chaque fois un crochet d'encliquetage (9) pouvant être amené en liaison active avec un doigt d'encliquetage (8), de sorte que le dispositif (1) puisse être maintenu dans une position courbée, à chaque crochet d'encliquetage (9) étant associé un élément de fermeture (10).

2. Dispositif selon la revendication 1, **caractérisé par le fait que** l'élément de fermeture (10) est formé sous forme de goupille.

3. Dispositif selon la revendication 2, **caractérisé par le fait qu'**un coin (11) est prévu à la goupille.

4. Dispositif selon l'une des revendications 1 à 3, **caractérisé par** au moins deux éléments (7), à au moins un élément (7) étant associés l'au moins un élément de fermeture (10) et l'au moins un élément de réception (12).

5. Dispositif selon la revendication 4, **caractérisé par le fait que** l'au moins un élément de fermeture (10) et l'au moins un élément de réception (12) sont disposés opposés l'un à l'autre.

6. Dispositif selon l'une des revendications 1 à 5, **caractérisé par le fait que** le dispositif (1) comporte une première (2) et une deuxième demi-coquille (3).

7. Dispositif selon la revendication 6, **caractérisé par le fait que** la première (2) et la deuxième demi-coquille (3) sont connectées de manière articulée entre elles.

8. Procédé pour fixer et guider des éléments allongés, en particulier pour tuyaux, câbles et conduits, **caractérisé par** les étapes suivantes consistant à: introduire l'élément à travers une ouverture (13) dans un dispositif (1) de cintrage et retenue selon l'une des revendications 1 à 7, et fermer l'ouverture (13).

9. Procédé selon la revendication 8, **caractérisé par** le fait de cintrer lu dispositif (1) de cintrage et retenue et l'élément dans une position souhaitée et d'encliqueter le dispositif (1) dans la position souhaitée.
